Europäisches Patentamt

European Patent Office

Office européen des brevets

(19)

(11) Veröffentlichungsnummer: **0 513 466 A1**

## (12) EUROPÄISCHE PATENTANMELDUNG

(21) Anmeldenummer: **91810863.0**

(51) Int. Cl.⁵: **F16J 13/10**

(22) Anmeldetag: **07.11.91**

(30) Priorität: **19.04.91 CH 1181/91**

(43) Veröffentlichungstag der Anmeldung:
**19.11.92 Patentblatt 92/47**

(84) Benannte Vertragsstaaten:
**AT CH DE ES FR GB IT LI NL SE**

(71) Anmelder: **GEBRÜDER SULZER AKTIENGESELLSCHAFT**
**Zürcherstrasse 12**
**CH-8400 Winterthur(CH)**

(72) Erfinder: **Ludwig, Alfred**
**Hulfteggstrasse 14**
**CH-8400 Winterthur(CH)**

(54) **Verschluss für einen Druckbehälter.**

(57) Der Druckbehälter besteht aus einem Unterteil (1) und einem deckelartigen Oberteil (2). Im Verschlussbereich von Unterteil (1) und Oberteil (2) weisen diese auf ihrer Aussenseite je ein in Umfangsrichtung des Druckbehälters verlaufendes Profil (7 bzw. 8) auf, in das in der Verschlussstellung mindestens drei über den Umfang des Druckbehälters verteilte ringsegmentförmige, den Profilen (7 und 8) entsprechend profilierte Kupplungsteile (9) eingreifen. Die Kupplungsteile (9) sind ihrerseits von einem axial verschiebbaren, mit ihnen zusammenwirkenden Ring (11) umgeben. Der Ring ist so gestaltet, dass er bei seiner Bewegung in die Verschlussstellung die Profilierung der Kupplungsteile (9) mit den Profilen (7 und 8) in Eingriff bringt und bei einer Bewegung in eine zweite Stellung, die zu seiner Verschlussstellung axial verschoben ist, die Profilierung der Kupplungsteile (9) einerseits und die Profile (7 und 8) andererseits ausser Eingriff bringt.

EP 0 513 466 A1

Die Erfindung betrifft einen Verschluss für einen Druckbehälter, der sich aus einem Unterteil und einem deckelartigen Oberteil zusammensetzt.

Bei bisherigen Verschlüssen dieser Art sind der Unterteil und der Oberteil nahe ihren aneinanderstossenden Enden aussen mit je einem Flansch versehen. Die Flansche sind von mehreren über den Behälterumfang gleichmässig verteilten Schraubenbolzen durchsetzt, mit denen der Unterteil und der Oberteil unter Druckbeanspruchung dicht zusammengehalten werden. Solche Flanschverbindungen haben den Nachteil, dass der Spannungsverlauf in den Flanschen und in den den Flanschen benachbarten Behälterwandbereichen komplex ist und dadurch die Festigkeitsberechnung erschwert wird.

Der Erfindung liegt die Aufgabe zugrunde, einen Druckbehälterverschluss zu schaffen, der einfacher in seinem Aufbau und in seiner Handhabung ist und bei dem die Festigkeitsberechnung im Verschlussbereich des Behälters leichter durchzuführen ist als bei den Druckbehältern mit verschraubten Flanschen.

Diese Aufgabe wird erfindungsgemäss jeweils durch die Merkmale der unabhängigen Ansprüche 1 und 2 gelöst. Bei diesen Gestaltungen des Verschlusses entfällt das Anbringen von Flanschen an den Behälterteilen sowie das Vorsehen von Bolzenschrauben zum dichten Zusammenspannen der Behälterteile. Beim erfindungsgemässen Verschluss wird zwecks Schliessens des Behälters der deckelartige Oberteil mitsamt dem axial verschiebbaren Ring und den ringsegmentförmigen Kupplungsteilen mittels eines Hebezeuges auf den Unterteil aufgesetzt und dann durch Axialverschiebung des Ringes die dichte Verbindung zwischen Oberteil und Unterteil mittels der Kupplungsteile hergestellt. In entsprechender Weise wird zum Oeffnen des Behälters mittels eines Hebezeuges zunächst der Ring axial verschoben, wobei die Kupplungsteile den Unterteil und den Oberteil entkuppeln, wonach mit dem selben Hebezeug der Oberteil abgehoben wird. Es entfällt hier also beim Verschliessen des Druckbehälters ein Anziehen von Schrauben und beim Oeffnen des Druckbehälters ein Lösen dieser Schraubverbindungen, wodurch die Handhabung des Verschlusses wesentlich vereinfacht wird. Wegen des Fehlens von Flanschen ist auch die Festigkeitsberechnung des Druckbehälters wesentlich einfacher.

Drei Ausführungsbeispiele der Erfindung sind in der folgenden Beschreibung anhand der Zeichnung näher erläutert. Es zeigen:

Fig.1   einen Vertikalschnitt durch einen Druckbehälter mit dem erfindungsgemässen Verschluss, wobei der Verschluss in der linken Hälfte in entkuppeltem Zustand und in der rechten Hälfte in gekuppeltem Zustand gezeigt ist,

Fig.2   eine Draufsicht auf einen Teil der ringsegmentförmigen Kupplungsteile jeweils ohne Führungsflanschteil,

Fig.3   einen Vertikalschnitt durch einen abgewandelten Verschluss in gekuppeltem Zustand,

Fig.4   einen Vertikalschnitt durch den Verschlussbereich eines weiteren abgewandelten Verschlusses in gekuppeltem Zustand und

Fig.5   den Verschlussbereich des Verschlusses gemäss Fig.4 in entkuppeltem Zustand.

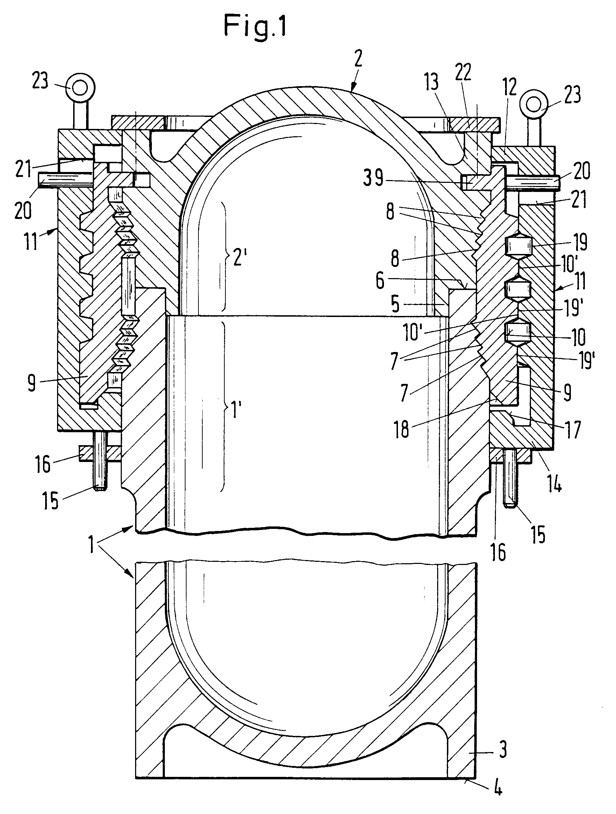

Gemäss Fig.1 besteht der für hohe Drücke, z.B. 300 bar, bestimmte Druckbehälter aus einem Unterteil 1 und einem deckelartigen Oberteil 2. Der in seinem Bodenbereich kugelförmig gestaltete Unterteil 1 weist an seinem unteren Ende eine vertikale Ringwand 3 auf, deren untere Stirnfläche 4 gegenüber der äusseren Kugelfläche etwas vorsteht und zugleich die Standfläche des Druckbehälters bildet. Vom kugelförmig gestalteten Boden ausgehend, bildet der Unterteil 1 eine zylindrische Wand, die nahe ihrem oberen Ende einen verdickten Abschnitt 1' aufweist.

Auch der deckelartige Oberteil 2 ist kugelförmig gestaltet und weist zum Unterteil 1 hin einen verdickten zylindrischen Abschnitt 2' auf. Auf der Aussenseite ist der Abschnitt 2' an seinem unteren Ende etwas abgearbeitet, so dass eine Schulter 6 und eine gegenüber dieser vorstehende Ringwand 5 entstehen. Mit der Schulter 6 ruht der Oberteil 2 auf dem Unterteil 1, wogegen die Ringwand 5 als zentrierende Führungsfläche beim Aufsetzen des Oberteils 2 dient. In der Aussenfläche der Ringwand 5 ist eine nicht dargestellte Ringnut zur Aufnahme eines ebenfalls nicht dargestellten O-Dichtungsrings vorgesehen, der im geschlossenen Zustand des Druckbehälters an der benachbarten Fläche des Unterteils 1 anliegt.

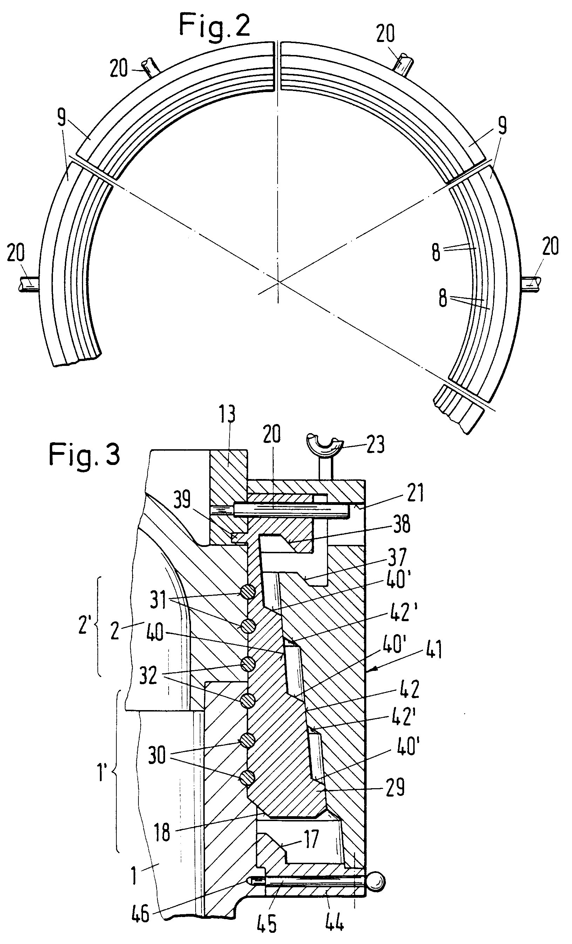

In die Aussenfläche der zylindrischen Abschnitte 1' und 2' sind je vier Ringnuten 7 bzw. 8 eingearbeitet, von denen jede dreieckigen Querschnitt aufweist und die jeweils zusammen ein sägezahnähnliches Profil bilden. Zu den Ringnuten 7 und 8 passende, sägezahnähnliche Vorsprünge sind auf der Innenseite von sechs ringsegmentförmigen Kupplungsteilen 9 vorgesehen, die um den Druckbehälter herum angeordnet sind (vergleiche auch Fig.2). In die Aussenfläche der Kupplungsteile 9 sind drei Ringnuten 10 mit trapezförmigem Querschnitt eingearbeitet. Zwischen den drei Ringnuten 10 sowie oberhalb der obersten Ringnut 10 entstehen somit im Querschnitt trapezförmige Zähne 10'.

Die sechs Kupplungsteile 9 sind von einem axial verschiebbaren Ring 11 umgeben, der an seinem oberen Ende einen nach innen ragenden Flansch 12 aufweist, der bis zu einer Ringwand 13 des Oberteils 2 reicht, die mit ihrer Aussenfläche den Ring 11 bei seiner Axialverschiebung führt. Am unteren Ende des Ringes 11 ist ein nach innen ragender Flansch 14 vorgesehen, der bis zur Aussenfläche des verdickten Abschnitts 1' reicht, der ebenfalls als Führung für den Ring 11 dient. An der Unterseite des Flansches 14 sind, über dessen Umfang verteilt, vertikale Stifte 15 angebracht, die in dazu passende Löcher eines am Unterteil 1 befestigten Ringes 16 ragen und die dafür sorgen, dass sich der Ring 11 nicht relativ zum Druckbehälter verdrehen kann. An der Oberseite des Flansches 14 ist eine konische Steuerfläche 17 vorgesehen, die mit einer entsprechenden konischen Fläche 18 am unteren Ende der Kupplungsteile 9 zusammenwirkt, wenn der Ring 11 in Fig.1 nach oben verschoben wird. Auf der Innenfläche des Ringes 11 sind den Ringnuten 10 entsprechende Ringnuten 19 eingearbeitet, die zwischen sich sowie unterhalb der untersten Ringnut 19 drei Zähne 19' mit trapezförmigem Profil entstehen lassen. Am oberen Ende der Kupplungsteile 9 weisen diese je einen radial nach aussen ragenden Stift 20 auf, von denen jeder in einem Langloch 21 des Ringes 11 geführt ist. Auf der Höhe der Stifte 20 weisen die Kupplungsteile 9 je einen nach innen ragenden Flanschteil 39 auf, der in einer passenden Ringnut des Oberteils 2 gleiten kann und eine horizontale Führung für den jeweiligen Kupplungsteil bildet.

Auf der Ringwand 13 des Oberteils 2 ist eine Ringscheibe 22 lösbar befestigt, die mit ihrem äusseren Rand gegenüber der Aussenfläche der Ringwand 13 vorsteht und somit einen Anschlag für die Verschiebebewegung des Ringes 11 bildet. Der Ring 11 weist an seinem oberen Ende mehrere über den Umfang verteilte Oesen 23 auf, in die je ein Haken o.dgl. eines Hebezeuges eingeführt werden kann.

Der beschriebene Verschluss funktioniert wie folgt.

In der in Fig.1 rechts dargestellten Stellung der Kupplungsteile 9 greifen deren sägezahnähnlichen Profile in die entsprechenden, von den Ringnuten 7 und 8 gebildeten Profile im Unterteil 1 bzw. im Oberteil 2. Der Ring 11 nimmt seine unterste Stellung ein, d.h. er liegt auf dem Ring 16 auf und seine trapezförmigen Zähne 19' liegen an den trapezförmigen Zähne 10' der Kupplungsteile 9 an und pressen diese gegen den Druckbehälter. Damit werden der Unterteil 1 und der Oberteil 2 sicher und dicht zusammengehalten.

Zum Oeffnen des Druckbehälters wird mittels eines Hebezeuges an den Oesen 23 des Ringes 11 eine nach oben gerichtete Zugkraft ausgeübt, die bewirkt, dass sich der Ring 11 vom Ring 16 abhebt. Kommen die trapezförmigen Zähne 19' in den Bereich der trapezförmigen Ringnuten 10 der Kupplungsteile 9 und die Steuerfläche 17 in Kontakt mit der Gegenfläche 18, werden die Kupplungsteile 9 radial nach aussen gedrückt, wobei die Flanschteile 39 die Kupplungsteile horizontal führen, und die Zähne 19' kommen in die Ringnuten 10 zu liegen; zugleich kommen die sägezahnähnlichen Profile der Kupplungsteile 9 aus den Ringnuten 7 und 8 heraus, wie dies in Fig.1 links gezeigt ist. Bei weiterer Zugbewegung nach oben legt sich der Ring 11 an die Ringscheibe 22 an, und der Oberteil 2 wird vom Unterteil 1 abgehoben.

Beim Verschliessen des Druckbehälters wird der Oberteil 2 mittels des Hebezeuges auf den Unterteil 1 abgesenkt. Wenn die Schulter 6 auf dem Unterteil 1 aufsitzt, wird der Ring 11 weiter abgesenkt, wobei wegen der geneigten Flanken der trapezförmigen Zähne 19' die Kupplungsteile 9 sich radial nach innen bewegen, so dass deren sägezahnförmiges Profil wieder mit den Ringnuten 7 und 8 in Eingriff kommen, wie dies in Fig.1 rechts dargestellt ist.

Beim Ausführungsbeispiel gemäss Fig.3 sind anstelle des sägezahnähnlichen Profils im Unterteil 1 und im Oberteil 2 Ringnuten 30 bzw. 31 mit halbkreisförmigem Querschnitt vorgesehen, in die je ein Drahtring 32 mit rundem Querschnitt eingelegt ist. Auf der Innenseite der Kupplungsteile 29 sind dementsprechend passende Ringnuten mit halbkreisförmigem Querschnitt eingearbeitet, die in gekuppeltem Zustand die Ringe 32 fest umschliessen.Abweichend vom Ausführungsbeispiel nach Fig.1 ist ausserdem, dass der axial verschiebbare Ring 41 ausser der unteren Steuerfläche 17 eine weitere Steuerfläche 37 im oberen Ringbereich aufweist, die mit einer entsprechenden konischen Fläche 38 an den Kupplungsteilen 29 zusammenwirkt. Die Kupplungsteile 29 weisen auch hier auf ihrer Innenseite je einen nach innen ragenden Flanschteil 39 auf, der in einer passenden Ringnut horizontal gleitet, die zwischen dem Oberteil 2 und der hier separat an diesem befestigten Ringwand 13 vorgesehen ist.

Statt der trapezförmigen Ringnuten mit den trapezförmigen Zähnen dazwischen sind beim Ausführungsbeispiel nach Fig.3 auf der Aussenseite der Kupplungsteile 29 und auf der Innenseite des Ringes 41 auf einer Kegelfläche liegende Stufenflächen 40 bzw. 42 vorgesehen, die in der letzten Phase des Kuppelns des Verschlusses aufeinander gleiten und die Kupplungsteile 29 gegen die zylindrischen Abschnitte 1' und 2' des Druckbehälters drücken. In der ersten Phase des Kuppelns werden die Kupplungsteile 29 von den geneigten Steuerflächen 42' der Stufenfläche 42, die dann auf den geneigten Gegenflächen 40' der Stufenfläche 40 gleiten, radial nach innen bewegt, so dass ihre halbkreisförmigen Nuten mit den Drahtringen 32 in Eingriff kommen. Der Kegelwinkel der Stufenflächen 40 und 42 beträgt 5°.

Im unteren Flansch 44 des Ringes 41 ist ein Arretierstift 45 angeordnet, der im gekuppelten Zustand des Verschlusses mit seinem in Fig.3 linken Ende in eine passende Sackbohrung 46 des Unterteils 1 ragt. Zum Entkuppeln des Verschlusses muss also der Arretierstift 45 zuvor aus der Sackbohrung 46 herausgezogen werden. Die jeweils in einem Langloch 21 des Ringes geführten Stifte 20 sind beim Ausführungsbeispiel gemäss Fig.3 in der Ringwand 13 befestigt und die Kupplungsteile 29 gleiten bei ihren radialen Bewegungen jeweils auf einem Stift 20.

Die Funktionsweise des Verschlusses nach Fig.3 ist im Prinzip gleich wie zu Fig.1 beschrieben. Zum Oeffnen des Verschlusses wird der Ring 41 mittels eines Hebezeuges angehoben, wobei die Steuerflächen 17 und 37 mit den Gegenflächen 18 bzw. 38 in Berührung kommen und dabei die Kupplungsteile 29 radial nach aussen verschieben, da sich gleichzeitig die geneigten Steuerflächen 42' der Stufenfläche 42 des Ringes 41 auf der Höhe der geneigten Gegenflächen 40' der Stufenfläche 40 der Kupplungsteile befinden. Die im Querschnitt halbkreisförmigen Ringnuten der Kupplungsteile 29 sind dann also ausser Eingriff mit den von den Drahtringen 32 gebildeten Profilen des Unterteils 1 und des Oberteils 2, so dass bei der weiteren Hubbewegung des Ringes 41 der deckelartige Oberteil 2 vom Unterteil 1 abhebt.

Abweichend von dem Ausführungsbeispiel nach Fig.3 können die kegelförmigen Stufenflächen 40 und 42 auch auf einer zylindrischen Mantelfläche liegen.

Die Anordnung der Stufenflächen 40 und 42 ist nicht an die durch die Drahtringe 32 gebildete Profilierung gebunden. Sie kann vielmehr auch bei der Ausführungsform gemäss Fig.1 mit der sägezahnähnlichen Profilierung angewendet werden, wie andererseits die Ausführungsform mit den trapezförmigen Zähnen 10' und 19' bei einer Profilierung mit Drahtringen 32 angewendet werden kann.

Auch bei dem Ausführungsbeispiel gemäss Fig.1 können im oberen Bereich der Kupplungsteile 9 den Gegenflächen 38 in Fig.3 entsprechende Flächen vorgesehen sein, die mit den Steuerflächen 37 in Fig.3 entsprechenden Steuerflächen am Ring 11 zusammenwirken.

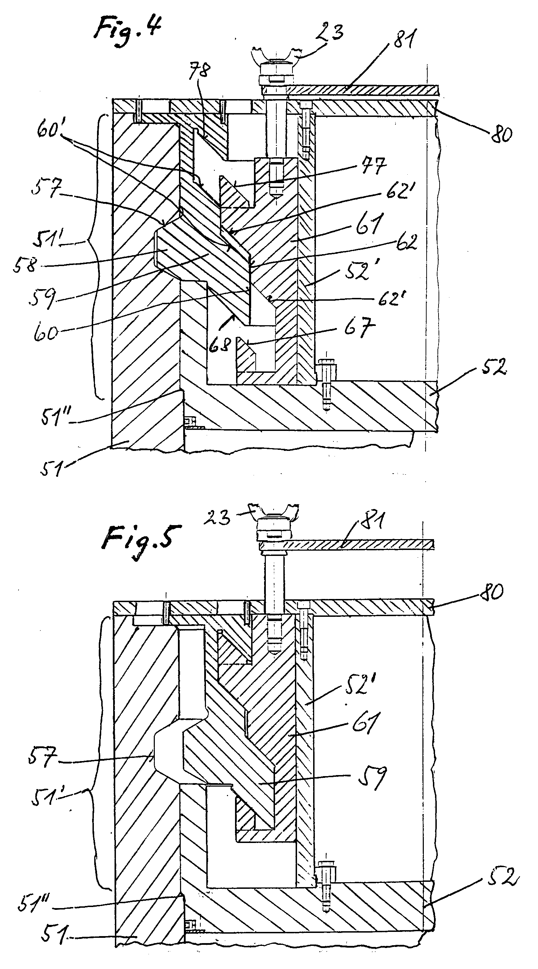

Bei dem Ausführungsbeispiel gemäss den Fig.4 und 5 ist das Prinzip des erfindungsgemässen Verschlusses bei einem Druckbehälter angewendet, bei dem der deckelartige Oberteil 52 in das obere Ende des Unterteils 51 hineinragt. Der Unterteil 51 weist wiederum einen zylindrischen Abschnitt 51' auf, dessen Innendurchmesser etwas grösser ist als der Innendurchmesser des übrigen zylindrischen Teils des Behälters. Am Uebergang vom grösseren Durchmesser zum kleineren Durchmesser besteht eine Schulter 51'', auf der der Deckel 52 ruht, dessen äusserer Umfang den beiden unterschiedlichen Innendurchmessern entsprechend abgesetzt ist. In die Innenfläche des Abschnitts 51' ist ein Profil 57 in Form einer Ringnut mit trapezförmigem Querschnitt eingearbeitet. In dieser Ringnut 57 ruhen in der Verschlussstellung gemäss Fig.4 die sechs ringsegmentförmigen Kupplungsteile 59, die auf ihrer Aussenseite entsprechend der Ringnut 57 profiliert sind, nämlich in Form jeweils eines in Umfangsrichtung verlaufenden Wulstes 58. Auf der Innenseite der Kupplungsteile 59 ist ein axial verschiebbarer Ring 61 angeordnet, der an einem ringförmigen zylindrischen Abschnitt 52' des Deckels 52 geführt ist.

Aehnlich dem Ausführungsbeispiel nach Fig.3 weist der Ring 61 zwei Steuerflächen 67 und 77 auf, die beim Oeffnen des Behälters mit entsprechend geneigten Gegenflächen 68 bzw. 78 an den Kupplungsteilen 59 zusammenwirken. Ausserdem sind auf der Innenseite der Kupplungsteile 59 und auf der Aussenseite des Ringes 61 auf einer Kegelfläche liegende Stufenflächen 60 bzw. 62 vorgesehen, die - wie beim Ausführungsbeispiel nach Fig.3 - in der letzten Phase des Kuppelns des Verschlusses aufeinander gleiten und die Kupplungsteile in das Profil 57 des zylindrischen Abschnittes 51' drücken. Zwei Steuerflächen 62' am Ring 61 wirken in der ersten Phase des Kuppelns mit zwei Gegenflächen 60' an den Kupplungsteilen 59 zusammen.

Am oberen Ende des zylindrischen Abschnittes 51' ist eine Platte 80 befestigt, die sich über den gesamten Querschnitt des Druckbehälters erstreckt und an der die Kupplungsteile 59 radial verschieblich geführt sind. Durch die Platte 80 erstrecken sich auch mehrere Oesen 23, von denen in Fig.4 und 5 nur eine dargestellt ist und die in das obere Ende des Ringes 61 eingeschraubt sind. Die Oesen 23 sind unter sich noch durch eine Scheibe 81 miteinander verbunden.

Zum Oeffnen des Deckels 52 wird mittels an den Oesen 23 befestigter Seile der Ring 61 angehoben. Wenn seine Steuerflächen 67 und 77 an den Gegenflächen 68 bzw. 78 der Kupplungsteile 59 zur Anlage kommen, verschieben sich die Kupplungsteile radial nach innen, wobei sie aus dem Profil 57 des Unterteils 51 heraustreten, wie dies in Fig.5 dargestellt ist. Im Laufe des weiteren Anhebens des Ringes 61 wird dieser zusammen mit der Platte 80, den Kupplungsteilen 59 und dem Deckel 52 aus dem Unterteil 51 herausgehoben.

Beim Verschliessen des Behälters werden die Kupplungsteile 59 - sobald der Deckel 52' auf der Schulter 51'' aufsitzt - zunächst von den Steuerflächen 62' und in der letzten Phase von den Stufenflächen 62 nach aussen gedrückt, wobei jeder Wulst 58 in die Ringnut 57 im zylindrischen Abschnitt 51' gepresst wird.

**Patentansprüche**

1. Verschluss für einen aus einem Unterteil und einem deckelartigen Oberteil bestehenden Druckbehälter, wobei der Oberteil und der Unterteil im Verschlussbereich je einen zylindrischen Abschnitt aufweisen und diese beiden Abschnitte auf ihrer Aussenseite mit einem in Umfangsrichtung des Druckbehälters verlaufenden Profil versehen sind, in das in der Verschlussstellung mindestens drei über den Umfang der beiden Abschnitte verteilte ringsegmentförmige, dem Profil der beiden Abschnitte entsprechend profilierte Kupplungsteile eingreifen, die ihrerseits von einem axial verschiebbaren, mit ihnen zusammenwirkenden Ring umgeben sind, der so gestaltet ist, dass er bei seiner Bewegung in die Verschlussstellung die Profilierung der Kupplungsteile mit den Profilen der beiden Abschnitte in Eingriff bringt und bei einer Bewegung in eine zweite Stellung, die zu seiner Verschlussstellung axial verschoben ist, die Profilierung der Kupplungsteile einerseits und die Profile der beiden Abschnitte andererseits ausser Eingriff bringt.

2. Verschluss für einen aus einem Unterteil und einem deckelartigen Oberteil bestehenden Druckbehälter, wobei der Oberteil in der Verschlussstellung in den oberen Endbereich des Unterteils ragt und der Oberteil und der Unterteil im Verschlussbereich je einen zylindrischen Abschnitt aufweisen, wobei der zylindrische Abschnitt des Unterteils auf seiner Innenseite mit einem in Umfangsrichtung des Druckbehälters verlaufenden Profil versehen ist, in das in der Verschlussstellung mindestens drei über den Umfang des Abschnittes verteilte ringsegmentförmige, dem Profil entsprechend profilierte Kupplungsteile eingreifen, die ihrerseits mit einem am zylindrischen Abschnitt des Oberteils axial verschiebbar geführten Ring zussammenwirken, der so gestaltet ist, dass er bei seiner Bewegung in die Verschlussstellung die Profilierung der Kupplungsteile mit dem Profil des Abschnittes am Unterteil in Eingriff bringt und bei einer Bewegung in eine zweite Stellung, die zu seiner Verschlussstellung axial verschoben ist, die Profilierung der Kupplungsteile einerseits und das Profil des Abschnittes des Unterteils andererseits ausser Eingriff bringt.

3. Verschluss nach Anspruch 1 oder 2, dadurch gekennzeichnet, dass der Ring mit mindestens einer zur Achse des Druckbehälters geneigten Steuerfläche versehen ist und dass die Kupplungsteile mit einer entsprechend geneigten, beim Bewegen des Ringes in die Verschlussstellung zusammenwirkenden Gegenfläche versehen sind.

4. Verschluss nach Anspruch 3, dadurch gekennzeichnet, dass der Ring mit mindestens einer weiteren, zur Achse des Druckbehälters geneigten Steuerfläche versehen ist und dass die Kupplungsteile mit einer entsprechend geneigten, beim Bewegen des Ringes in die zweite Stellung zusammenwirkenden Gegenfläche versehen sind.

5. Verschluss nach einem der Ansprüche 1 bis 4, dadurch gekennzeichnet, dass das Profil im jeweiligen zylindrischen Abschnitt und die Profilierung in den Kupplungsteilen von Ringnuten mit dreieckförmigem Querschnitt gebildet sind.

6. Verschluss nach einem der Ansprüche 1 bis 4, dadurch gekennzeichnet, dass im jeweiligen Abschnitt und in den Kupplungsteilen Ringnuten mit halbkreisförmigem Querschnitt vorgesehen sind und dass zum Bilden der Profile in jeder Ringnut des jeweiligen Abschnittes ein Drahtring mit rundem Querschnitt eingelegt ist.

# Fig.1

# Fig.2

# Fig. 3

Fig.4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-B-1 050 139 (THE BABCOCK) <br> * Ganzes Dokument * <br> --- | 1,3,4 | F 16 J 13/10 |
| Y | DE-C- 717 229 (KLEPPER) <br> * Ganzes Dokument * | 1,3 | |
| A | | 5 | |
| | --- | | |
| A | DE-A-1 475 128 (REXROTH) <br> * Ganzes Dokument * <br> --- | 1 | |
| A | US-A-4 823 976 (WHITE, III) <br> * Ganzes Dokument * <br> ----- | 1,3,4 | |

| RECHERCHIERTE SACHGEBIETE (Int. Cl.5) |
|---|
| F 16 J <br> F 16 B |

Der vorliegende Recherchenbericht wurde für alle Patentansprüche erstellt

| Recherchenort | Abschlußdatum der Recherche | Prüfer |
|---|---|---|
| DEN HAAG | 10-08-1992 | LEGER M.G.M. |

EPO FORM 1503 03.82 (P0403)